# EUROPEAN PATENT APPLICATION

(11) **EP 1 208 886 A2**
(43) Date of publication of application: **29.05.2002**
(21) Application number: 01127665.6
(22) Date of filing: 20.11.2001
(51) Int. Cl.: A63F 13/10, A63F 13/12

(54) **Game terminal device**

(30) Priority: 21.11.2000 JP 2000354502; 21.06.2001 JP 2001188748
(71) Applicant: Sony Computer Entertainment Inc., Tokyo 107-0052 (JP)
(72) Inventor: Matsuura, Masaya, Meguro-ku, Tokyo 153-0063 (JP); Matsuura, Kiri, Meguro-ku, Tokyo 153-0063 (JP); Ohmori, Masato, Minato-ku, Tokyo 107-0052 (JP); Kojima, Hidehito, Minato-ku, Tokyo 107-0052 (JP)
(74) Representative: Müller - Hoffmann & Partner

(57) **Abstract**

A control section shows a target measurement value, such as the height of Mt. Fuji or the diameter of a 10-yen coin, to the player by displaying it on a liquid crystal display. The player rotates a rotary operation member to advance a displayed character up to the target measurement value. Since the rotary operation member has a certain circumferential length, the control section multiplies the circumferential length by the number of rotations of the rotary operation member to obtain the distance covered by the character. At the end of the game, the difference of the calculated distance from the target measurement value is shown to the player. Thus the entertaining game for testing the player's sense of distance can be realized even in a low performance device.

## Description

This application is related to Japanese Patent Application No. 2000-354502 filed on November 21, 2000 and No. 2001-188748 filed on June 21, 2001, based on which this application claims priority under the Paris Convention and the contents of which are incorporated herein by reference.

### BACKGROUND OF THE INVENTION

### 1. Field of the Invention

The present invention relates to terminal devices suitably applicable to portable terminal devices such as portable telephones, PHS (Personal Handy-phone System) terminals, and portable game machines, and also to storage media storing thereon a computer programs for the play methods, and network game systems.

### 2. Description of the Related Art

Currently, portable terminal devices easy to carry, such as portable telephones, PHS (Personal Handy-phone System) terminals, and portable game machines, have spread. In such portable terminal devices, many portable telephones and PHS terminals, as well as the portable game machines, store therein some game programs to enjoy the games outdoors.

However, these portable terminal devices are required to be small in size for portability. As a result, the portable terminal devices cannot but be inferior in performance to general video game machines. It is very hard to execute therein such large-scale video games as executed in the general video game machines. Therefore, in developing games for such portable terminal devices, the inferiority in performance must be taken into consideration but yet entertaining games must be designed.

### SUMMARY OF THE INVENTION

An object of the present invention is to provide terminal devices capable of realizing entertaining games even in low performance devices, and also to provide corresponding methods for operating terminal devices (in the following also referred to as play methods), computer program products and storage media storing thereon at least one computer program for the play methods, and network game systems.

A terminal device according to one aspect of the present invention is defined in claim 1, a corresponding method according to the present invention is defined in claim 9, and a corresponding network game system according to the present invention is defined in claim 17. Preferred embodiments thereof are respectively defined in the respective following subclaims.

A terminal device according to another aspect of the present invention is defined in claim 19, a corresponding method according to the present invention is defined in claim 26, and a corresponding network game system according to the present invention is defined in claim 32. Preferred embodiments thereof are respectively defined in the respective following subclaims.

A computer program product according to the present invention is defined in claim 33 and a storage medium according to the present invention is defined in claim 34.

According to one aspect of the present invention, the user can play video game for testing his or her sense of distance by operating the operation member so that the distance covered by the character in the video game may correspond to a target measurement value such as a distance, height, or length.

The present invention is applicable to even low performance devices, and yet entertaining games can be provided.
Other and further objects and features of the present invention will become obvious upon understanding of the illustrative embodiments about to be described in connection with the accompanying drawings or will be indicated in the appended claims, and various advantages not referred to herein will occur to one skilled in the art upon employing the invention in practice.

### BRIEF DESCRIPTION OF THE DRAWINGS

FIG. 1 is a block diagram of a principal part of a portable telephone according to the first and second embodiments of the present invention;
FIG. 2 is a view showing an example of external appearance of the portable telephone according to the first and second embodiments;
FIG. 3 is a view showing another example of external appearance of the portable telephone according to the first and second embodiments;
FIG. 4 is a flowchart of a video game provided in the portable telephone according to the first embodiment;
FIG. 5 is a diagram showing a schematic construction of a network game system for the portable telephone according to the first and second embodiments;
FIGS. 6A to 6C illustrate a series of display images of the video game provided in the portable telephone according to the first embodiment;
FIG. 7 is a flowchart of a video game provided in the portable telephone according to the second embodiment;
FIGS. 8A to 8C illustrate a series of display images of the video game provided in the portable telephone according to the second embodiment; and
FIG. 9 illustrates degrading appearances of a character of the video game provided in the portable telephone according to the second embodiment.

### DETAILED DESCRIPTION OF THE PREFERRED EMBODIMENTS

The present invention is applicable to portable telephones.

### First Embodiment

### Electrical Construction of Principal Part of Portable Telephone

In a portable telephone according to the first embodiment of the present invention, using a feature that a rotary operation member provided in the portable telephone has a certain circumferential length, a video game can be played in which the score obtained becomes higher the narrower the difference is between a "length (distance)" as a target value set by the program of the video game, e.g., the height of Mt. Fuji, the diameter of a 10-yen coin, or the like, and the total amount of the circumferential length in rotations of the rotary operation member operated.

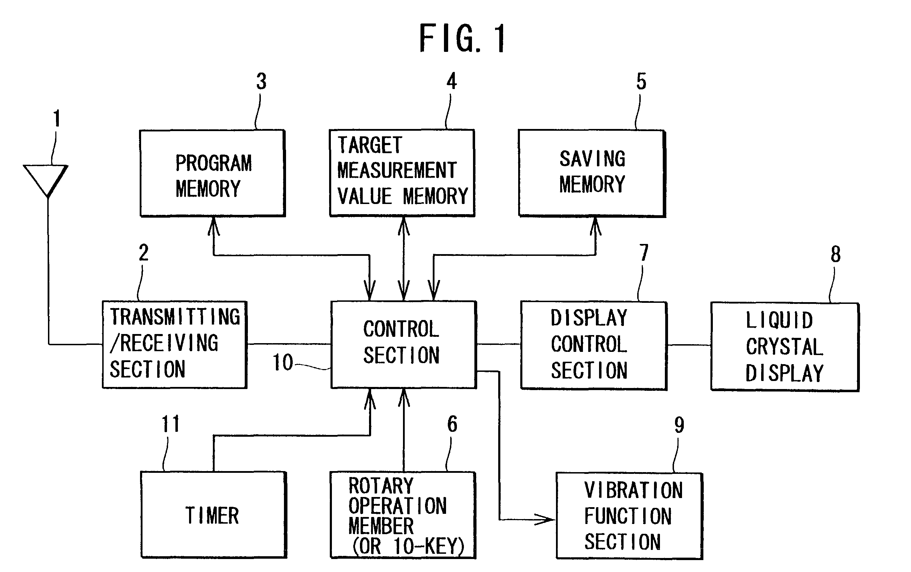

FIG. 1 is a block diagram of a principal part of the portable telephone according to this first embodiment. Referring to FIG. 1, the portable telephone includes a transmitting/receiving section 2 for transmitting/receiving talk data, e-mail data, etc., through an antenna 1 in wireless communication to/from a predetermined base station, a program memory 3 for storing a program for the above-described video game in advance or downloaded from a predetermined server machine through the antenna 1 and the transmitting/receiving section 2, and a target measurement value memory 4 for storing a "target measurement value", e.g., the height of Mt. Fuji as described above, that has been set by the game program stored in the program memory 3.

The portable telephone further includes a rotary operation member 6 to be operated by a player, a saving memory 5 for storing (saving) the value of length (distance) at a time when the game is interrupted halfway, which value has been obtained by measuring the total circumferential length in rotations of the rotary operation member 6 till then, and a display control section 7 for controlling a liquid crystal display 8 on the basis of the game program to display, e.g., a character image, an image for showing a game result, etc.

The portable telephone further includes a vibration function section 9 to be driven, e.g., when the character displayed on the liquid crystal display 8 collides with an obstacle, a control section 10 for controlling the whole operation of this portable telephone, and a timer 11 for measuring time.

Although a case wherein length (distance) is measured in proportion to rotations of the rotary operation member 6 will be described below, alternatively a certain distance may be added every time when a predetermined key is operated one or more times.

FIG. 1 only illustrates functions for executing the video game. This portable telephone, of course, includes various functions other than those illustrated in FIG. 1, e.g., functions for talk, functions for e-mail, and functions for call reception melody, etc.

### Construction in External Appearance of Portable Telephone

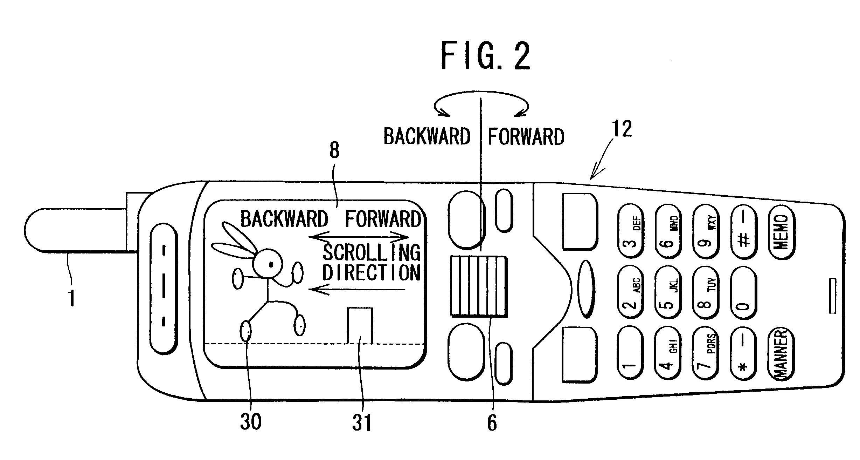

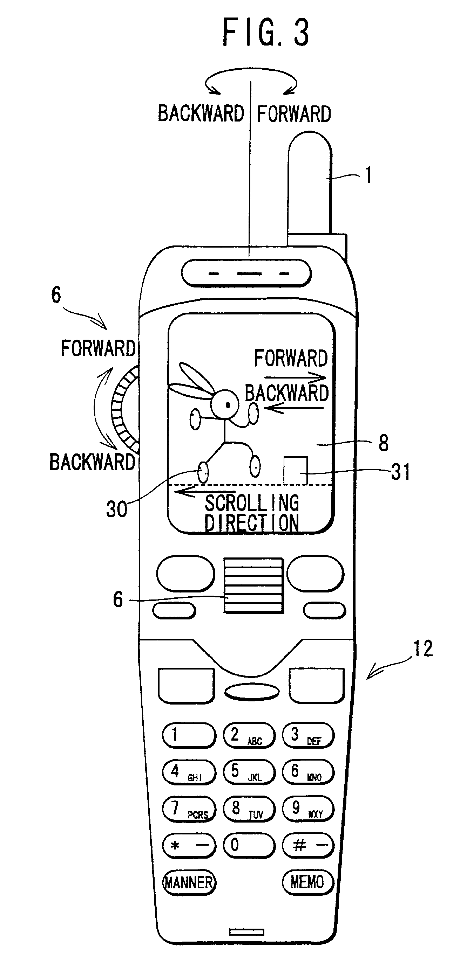

FIGS. 2 and 3 illustrate examples of external appearance of the above-described portable telephone. In the example of FIG. 2, the above-described rotary operation member 6 is disposed between the liquid crystal display 8 and a key operation area 12 where 10-key and so on are provided. The rotary operation member 6 of the portable telephone illustrated in FIG. 2 has the axis of rotation along the width of the telephone body. The user puts his or her finger on the rotary operation member 6 and moves the finger in the direction from the key operation area 12 toward the liquid crystal display 8 or in the reverse direction to rotate the rotary operation member 6.

In a normal operation mode, the rotary operation member 6 is used for scrolling the display of, e.g., a list of telephone numbers or mail addresses for retrieval. Such a list is stored in a telephone directory memory or an address book memory in the portable telephone. The rotary operation member 6 can be not only rotated but also depressed. When the user depressed the rotary operation member 6, for example, the telephone number or mail address displayed at that time is judged to be selected (determined) and the portable telephone is put in a standby state for receiving user's instructions for talk or e-mail transmission.

In the portable telephone of this embodiment, the rotary operation member 6 to be thus used in the normal operation is utilized for executing the video game as described below.

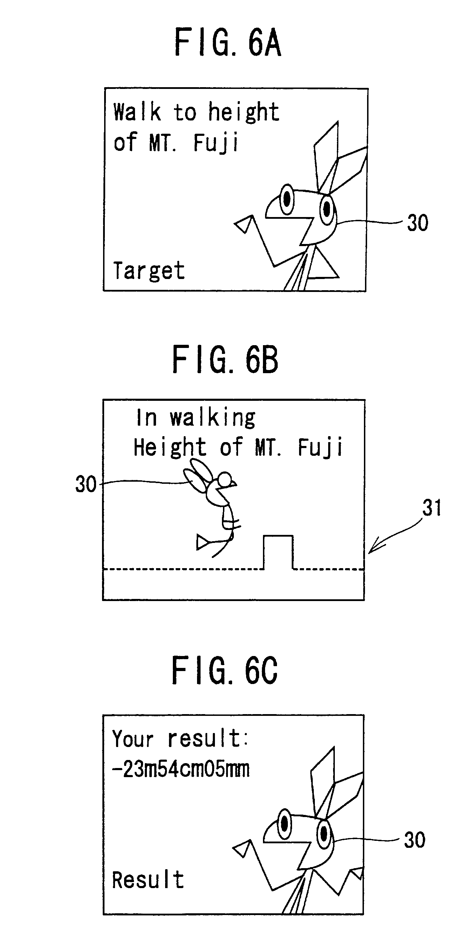

In the portable telephone of this embodiment, a character 30 and an obstacle 31 (see FIGS. 6A to 6C) displayed on the liquid crystal display 8 move as the rotary operation member 6 is rotated.

In this video game, the character 31 goes on the road with jumping over such an obstacle 31. As illustrated in FIG. 2, the obstacle 31 displayed on the liquid crystal display 8 moves by scrolling in the direction corresponding to that from the key operation area 12 toward the liquid crystal display 8.

The character 30 relatively moves forward when the rotary operation member 6 is rotated in the direction from the liquid crystal display 8 toward the key operation area 12, and backward when the rotary operation member 6 is rotated in the reverse direction.

The rotary operation member 6 can be not only rotated but also depressed, as described above. The player depresses the rotary operation member 6 at a timing when the obstacle 31 displayed on the liquid crystal display 8 has come just before the character 30. The character 30 then jumps at the timing when the rotary operation member 6 is depressed, so as to avoid the obstacle 31.

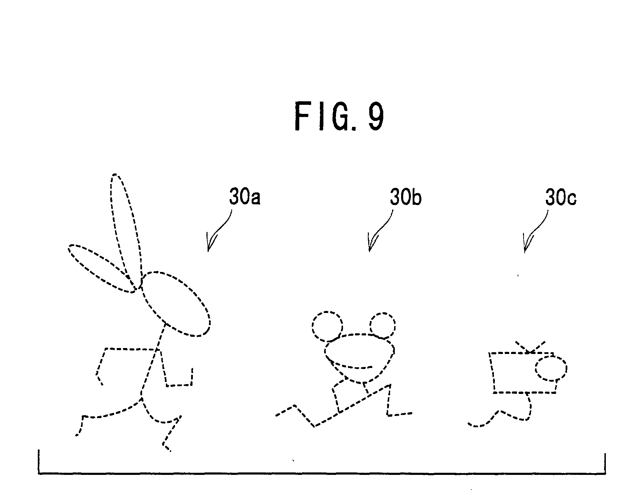

The control section 10 (see FIG. 1) judges as to whether or not the character 30 has collided with the obstacle 31. When the character 30 has collided with the obstacle 31, the control section 10 drives the vibration function section 9 (see FIG. 1) to vibrate the telephone body. The player, thereby, can sense that the character 30 has collided with the obstacle 31. This makes the game exciting. The appearance of the character 30 may be changed every time when such a collision is detected (see FIG. 9 in connection with the second embodiment).

In this type of portable telephone, the rotary operation member 6 is rotated in the direction from the liquid crystal display 8 toward the key operation area 12 or in the reverse direction, and the character 30 and the obstacle 31 displayed on the liquid crystal display 8 move in response to the rotation of the rotary operation member 6. When the player plays this video game, therefore, he or she generally keeps the portable telephone in a horizontal position so that the antenna 1 and the key operation area 12 may be at his or her left and right hands, respectively, as illustrated in FIG. 2. In this state, the player rotates the rotary operation member 6 with his or her finger to play the game.

Although the rotary operation member 6 of the portable telephone illustrated in FIG. 2 has the axis of rotation along the width of the telephone body, alternatively the rotary operation member 6 may have the axis of rotation along the length of the telephone body as illustrated by alternate long and two short dashes lines in FIG. 3.

In this case, even when the player plays the video game, he or she keeps the portable telephone in a vertical position so that the antenna 1 may be on the upper side. The obstacle 31 displayed on the liquid crystal display 8 moves from the right hand toward the left hand of the player, as illustrated in FIG. 3.

The character 30 moves forward when the player rotates the rotary operation member 6 from his or her left hand toward his or her right hand, and backward when the rotary operation member 6 is rotated in the reverse direction. The player can depress the rotary operation member 6 so that the character 30 can jump over the obstacle 31, like the above description.

In the example of FIG. 3, the rotary operation member 6 in question is incarnated as a rotary dial provided on the upper left side (opposite to the antenna 1 side) of the portable telephone in a vertical position, though it may alternatively be provided on the upper right side.

The rotary operation member 6 of this example has the axis of rotation along the thickness of the telephone body. The user puts his or her finger on the rotary operation member 6 and moves the finger upward or downward to rotate the rotary operation member 6 clockwise or counterclockwise.

The clockwise rotation of the rotary operation member 6 makes the player imagine the forward movement of the character 30 while the counterclockwise rotation does the backward movement. In this video game, therefore, the obstacle 31 displayed on the liquid crystal display 8 of the portable telephone in a vertical position moves by scrolling from the right hand toward the left hand of the player. The character 30 moves forward when the rotary operation member 6 is rotated clockwise, and backward when the rotary operation member 6 is rotated counterclockwise.

The rotary operation member 6 of this example also can be depressed. The player depresses the rotary operation member 6 at a timing when the obstacle 31 displayed on the liquid crystal display 8 has come just before the character 30. The character 30 then jumps at the timing when the rotary operation member 6 is depressed, so as to avoid the obstacle 31.

In this type of portable telephone, the rotary operation member 6 is rotated clockwise or counterclockwise around the axis along the thickness of the telephone body, and the character 30 and the obstacle 31 displayed on the liquid crystal display 8 move in response to the rotation of the rotary operation member 6. When the player plays this video game, therefore, he or she generally keeps the portable telephone in a vertical position so that the antenna 1 may be on the upside, as illustrated in FIG. 3. In this state, the player rotates the rotary operation member 6 with his or her finger to play the game.

In either type portable telephone of FIGS. 2 and 3, when the player rotates the rotary operation member 6 in a direction, the obstacle 31 moves and the character 30 moves forward or backward to match the player's feeling. The player, therefore, can enjoy this video game by rotating the rotary operation member 6 in accordance with his or her sensuous impression.

### Operation for Executing Video Game

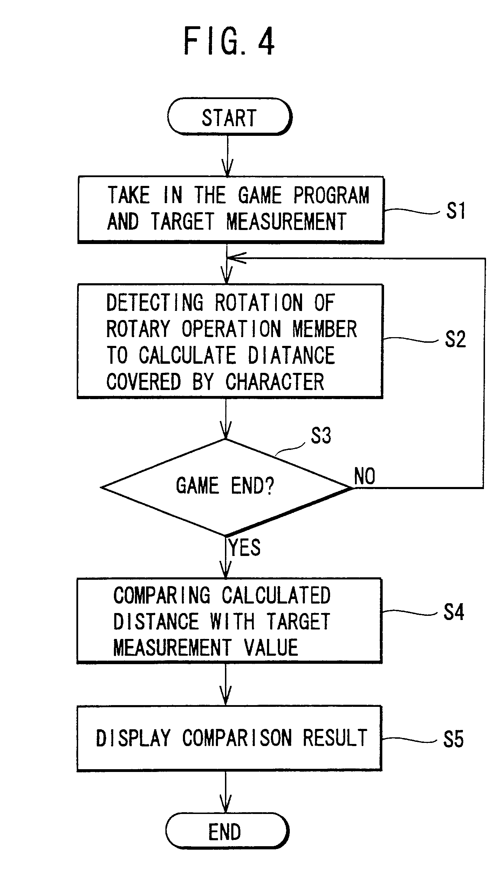

The operation for executing the video game in the portable telephone according to this first embodiment will be described below with reference to the flowchart of FIG. 4. The flow of FIG. 4 is started and advances to step S-1 when the main power supply of the portable telephone is turned on and the player selects the play of this video game.

In step S1, the control section 10 reads out a game program for this video game from the program memory 3. At the same time, the control section 10 takes in a target measurement value, e.g., the height of Mt. Fuji, the diameter of a 10-yen coin, or the like, which has been incorporated in the game program. The control section 10 stores the game program and the target measurement value in the target measurement value memory 4. The flow then advances to step S2.

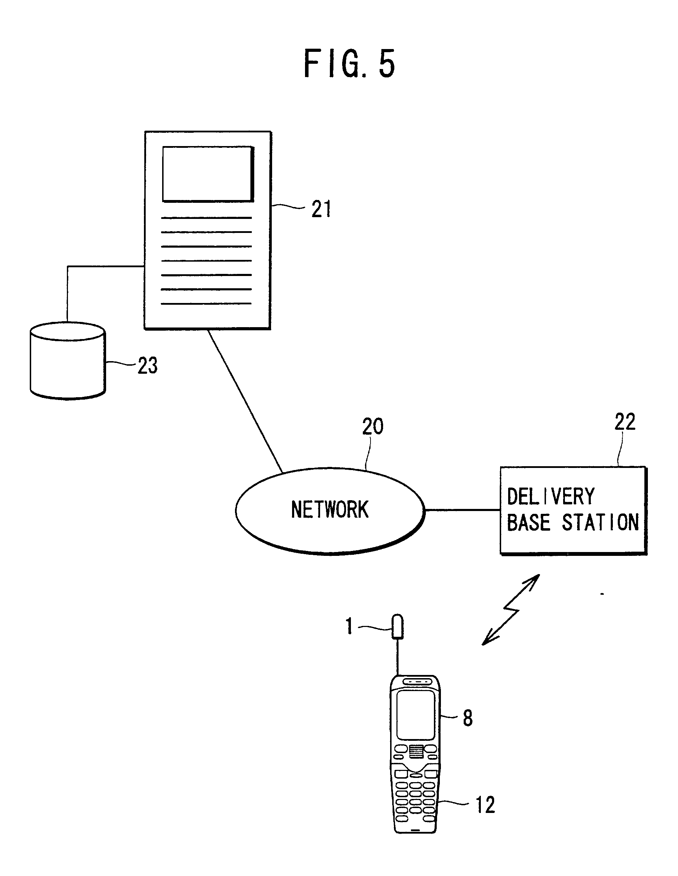

Such a game program and a target measurement value or values may have been stored beforehand in the program memory 3 as fixed data. Alternatively, they may be externally downloaded to the portable telephone, e.g., through a network system as illustrated in FIG. 5.

In the network system of FIG. 5, the game program (and a target measurement value or values) for this video game is stored in a database 23 of a server machine 21 connected to a network 20. The player accesses the server machine 21 to receive the game program and a target measurement value or values via a delivery base station 22.

In another modification, only a target measurement value or values may be externally downloaded while the game program has been beforehand stored in the program memory 3 as fixed data. In still another modification, a target measurement value prepared by the player him- or herself can be recorded in the server machine, or the player can freely modify a target measurement value stored in the server machine 21. Any player can receive such a target measurement value by downloading. A target measurement value or values (and the game program) may be sent to the player as a file appended to an e-mail.

Next, after completing the read of the game program, the control section 10 controls the liquid crystal display 8 on the basis of the game program to display a character 30 and show a target measurement value to the player, e.g., as illustrated in FIG. 6A. FIG. 6A illustrates a case wherein "the height of Mt. Fuji" is set as the target measurement value. In the example of FIG. 6A, the target measurement value as the goal of the game is shown to the player by a sentence "Walk to the height of Mt. Fuji".

The rotary operation member 6 has a certain circumferential length. In this video game, the number of rotations of the rotary operation member 6 operated by the player is multiplied by the circumferential length to obtain the distance covered by the character 30. The player, therefore, must rotates the rotary operation member 6 so that the character 30 may cover the distance equal to the set target measurement value.

In step S2 of FIG. 4, the control section 10 calculates the distance that the character 30 has covered by the player rotating the rotary operation member 6. The flow then advances to step S3.

As described above, the rotary operation member 6 has a certain circumferential length. The control section 10 knows this circumferential length in advance. Therefore, by considering that the character 30 advances by the distance corresponding to the circumferential length of the rotary operation member 6 in every rotation of the rotary operation member 6, and making a calculation "(the number of rotations of the rotary operation member 6) × (the circumferential length of the rotary operation member 6)", the control section 10 can obtain the total distance covered by the character 30.

Alternatively, the character 30 may advance by the distance corresponding to the circumferential length of the rotary operation member 6 in every predetermined number of rotations of the rotary operation member 6.

In this video game, the distance covered by the character 30 is not displayed in the middle of the game. The player, therefore, must rotates the rotary operation member 6 to move the character 30 with counting the number of rotations of the rotary operation member 6 or by his or her sixth sense.

The distance covered by the character 30 may be displayed in the middle of the game. Or, the display/non-display of the distance may be selected by the player.

This video game is enjoyable visually and operationally. After the game starts, the control section 10 controls the liquid crystal display 8 to display an obstacle 31 that moves toward the character 30 by scrolling, as illustrated in FIG. 6B. The player who is moving the character 30 by rotating the rotary operation member 6 depresses the rotary operation member 6 at a timing when the obstacle 31 has come just before the character 30. The character 30 then jumps to avoid the obstacle 31. The player thus enjoys this game by rotating and depressing the rotary operation member 6 so as to advance the character 30 with avoiding such obstacles 31.

In step S3 of FIG. 4, the control section 10 judges as to whether or not it has received an instruction from the player to end the game. When the control section 10 judges in this step S3 that it has not yet any instruction from the player to end the game (in case of NO), the flow returns to step S2 to repeat the above-described operation. The control section 10 thus repeats the calculation of the distance covered by the character 30, till it receives an instruction from the player to end the game. When the control section 10 judges in this step S3 that it has received an instruction from the player to end the game (in case of YES), the flow advances to step S4.

This video game is ended in the following cases. When the player judges that he or she has rotated the rotary operation member 6 to correspond to the target measurement value (the character 30 has covered the distance equal to the target measurement value), he or she operates a predetermined key to end the game finally. Alternatively, when the player wants to suspend the game, he or she operates another predetermined key to end the game temporarily. The control section 10 judges in step S3 whether or not one of those keys has been operated. At the timing when one of those keys is operated, the flow advances to step S4.

When the player gives the control section 10 an instruction to suspend the game, the control section 10 stores (saves), in the saving memory 5 illustrated in FIG. 1, the distance covered by the character 30 till the instruction to suspend is given. After this, when the player restarts this game and wants to play it continuously from the saved data, the control section 10 reads out the saved distance value from the saving memory 5 and continues the calculation of the distance from the saved value.

For example, when the height of Mt. Fuji is set at the target measurement value, it is 3776 m above sea level. Contrastingly, the circumferential length of the rotary operation member 6 is, e.g., only about 2 cm. As a result, a very large number of rotations of the rotary operation member 6 is required for advancing the character 30 to the height of Mt. Fuji. Thus it is hard to advance the character 30 to the height of Mt. Fuji by only a single time of play. But the above-described saving function makes it possible to complete the game by a series of plays.

When the control section 10 receives an instruction from the player to end the game, the flow advances to step S4, in which the control section 10 compares the calculated value as the distance covered by the character 30 at that time, with the target measurement value. The flow then advances to step S5, in which the control section 10 controls the liquid crystal display 8 to display, as a game result, the difference of the distance covered by the character 30 at that time, from the target measurement value. This video game is then ended.

FIG. 6C illustrates an example of display image for a game result of this video game. In the illustrated example, the difference of the distance covered by the character 30, which was obtained by the player having rotated the rotary operation member 6, from the target measurement value is displayed together with the character 30 on the liquid crystal display 8, e.g., "Your result: -23 m 54 cm 05 mm." This means that the distance obtained by the player having rotated the rotary operation member 6 to advance the character 30 was 23 m 54 cm 05 mm short to the target measurement value.

### Network Game

The user of this portable telephone can not only solely play the game but also compete with other players in the game.

When the user of this portable telephone wants to compete with other players, he or she accesses the server machine 2 to download a game program and a target measurement value for competition. After playing the game, the player transmits the game result with his or her own name (it may be his or her handle (nickname) or the like) to the server machine 21.

When receiving the game result from the player, the server machine 21 inquires of the player whether or not his or her rank is to be registered. If the player requests the registration of his or her rank, the server machine 21 registers the player's game result with his or her name at the position corresponding to the game result in a database.

In the database thus made is a ranking list in which game results with the players' names are ranked in the order from the best to the worst (the narrower the difference is between the target measurement value and the distance covered by the player's character 30, the hither the player's rank is). Any player can freely access the ranking list. The player can enjoy the game to obtain a better result than that of another player.

The sever machine 21 may present a predetermined item (in most cases, digital contents) to a player in accordance with his or her game result.

More specifically, to a player whose game result was better than a predetermined game result, the server machine 21 presents, e.g., a program for making his or her character 30 dance at the time when a game result is displayed. Besides, the player acquires a right of registering a new target measurement value for other players. Furthermore, the server machine 21 may give the player, e.g., a special call-reception melody, image data of a standby image, his or her fortune told, a special character (so-called hidden character) , or audio data of an interlude or background sound such as hand clapping, cheers, or a shout. Such audio data of the interlude or the like may be assigned to a predetermined (or arbitrary) key in the 10-key. When the key is depressed, the tone of hand clapping, cheers, a voice of the character, or the like is reproduced.

The server machine 21 includes therein a bulletin board system (BBS) to which any player can have access and freely write a message or opinion. Through the bulletin board system, a player can exchange information with another player.

As described above, this video game can be enjoyed not only solely but also by many players.

### Effect of First Embodiment

As described above, in the portable telephone of this first embodiment, the user can play the video game for testing his or her sense of distance, by rotating the rotary operation member 6 so that the distance covered by the character 30 may correspond to a target measurement value such as a distance, height, or length. This video game can be realized even in such low performance devices as portable telephones, but yet it is entertaining.

Besides, since many familiar distances, heights, lengths, etc., can be used as target measurement values of this video game, this video game can be enjoyed in many stages (target measurement values). This video game, therefore, may hardly weary the player.

### Second Embodiment

The second embodiment of the present invention will be described next. In the portable telephone according to the first embodiment provided is the video game in which the player rotates the rotary operation member 6 so that the distance covered by the character 30 may correspond to a target measurement value set in the game. In a portable telephone according to this second embodiment, however, provided is a video game in which the player operates the rotary operation member 6 so that a character put on a rotating member may not fall out of the rotating member for a predetermined time period.

The portable telephone of this second embodiment differs from that of the first embodiment only on this point. In this second embodiment, therefore, only the difference from the first embodiment will be described, thereby omitting the repetitive description.

### Construction of Second Embodiment

Also in this second embodiment, like the first embodiment, a game program for the video game is stored in the program memory 3. It may have been stored in the program memory 3 as fixed data, or it may be externally downloaded from, e.g., the server machine 21 and then stored in the program memory 3.

In the video game of this second embodiment, on the basis of time information obtained from the timer 11, the control section 10 measures time for which the character keeps on the rotating member without falling.

### Operation for Executing Video Game

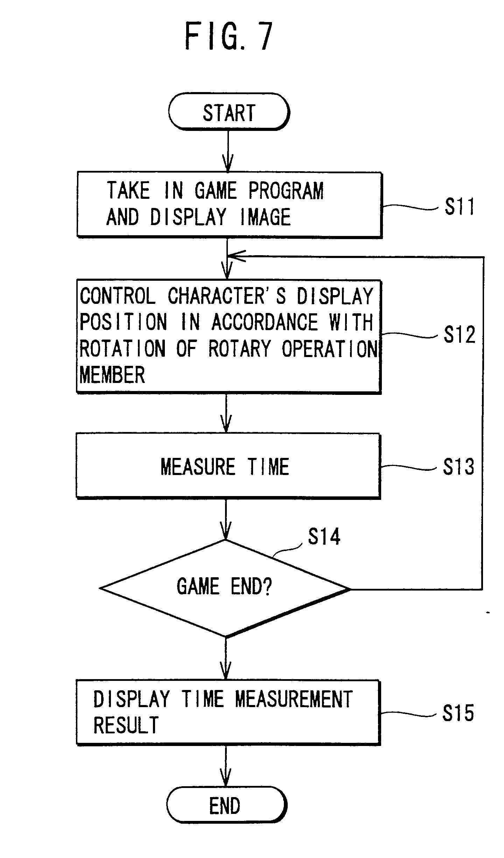

The operation for executing the video game in the portable telephone according to this second embodiment will be described below with reference to the flowchart of FIG. 7. The flow of FIG. 7 is started and advances to step S11 when the main power supply of the portable telephone is turned on and the player selects the play of this video game.

In step S11, the control section 10 illustrated in FIG. 1 reads out a game program for this video game from the program memory 3. At the same time, the control section 10 takes in image data of the first stage of the game, which has been incorporated in the game program. On the basis of the image data, the control section 10 controls the liquid crystal display 8 through the display control section 7 to display thereon an image of the first stage. Besides, the control section 10 starts to measure time on the basis of time information obtained from the timer 11. The flow then advances to step S12.

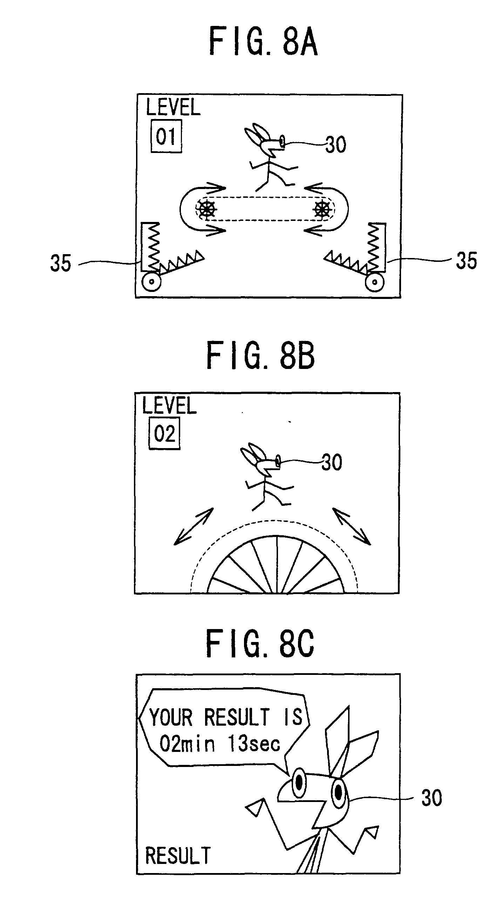

FIG. 8A illustrates an example of display image of the first stage of this video game. In the example of FIG. 8A, with a display "Level 01" indicating that the present stage is the easiest stage, a character 30 is put on a belt conveyor, which is an incarnation of the rotating member of the present invention. Besides, enemy characters 35 are disposed at positions onto which the character 30 may fall out of the belt conveyor.

As shown by double-headed arrows in FIG. 8A, the traveling direction of the belt conveyor is reversed from clockwise to counterciockwise and vice versa at regular or irregular time intervals. This image makes the player easily perceive that the character 30 may be damaged by the corresponding enemy character 35 if the character 30 has fallen out of the belt conveyor.
The upper traveling path of the belt conveyor extends to match the directions for operating the rotary operation member 6, like the case of movement of obstacle 31 as described before with reference to FIGS. 2 or 3. The player, therefore, can move the character 30 by rotating the rotary operation member 6 in accordance with his or her sensuous impression.

More specifically, the player rotates the rotary operation member 6 so that the character 30 may keep on the belt conveyor, i.e., the character 30 may move forward or backward in the opposite direction to the traveling direction of the belt conveyor.

However, if the character 30 moves in the opposite direction to the traveling direction of the belt conveyor at a speed higher than the traveling speed of the belt conveyor, then the character 30 may fall out of the belt conveyor. Thus the player enjoys this game by rotating the rotary operation member 6 so as to move the character 30 forward or backward at an appropriate speed that matches the traveling speed of the belt conveyor.

Although the character 30 is moved by rotating the rotary member 6 in the above example, alternatively the character 30 may be moved by selectively depressing, e.g., two keys in the key operation area 12.

In step S12 of FIG. 7, the control section 10 controls the liquid crystal display 8 to display the character 30 at the position in accordance with the player's operation of the rotary operation member 6. The flow then advances to step S13. As described above, the player is rotating the rotary operation member 6 so that the character 30 may keep on the belt conveyor.

In step S13, on the basis of time information obtained from the timer 11, the control section 10 measures time for which the character 30 keeps on the belt conveyor without falling. The flow then advances to step S14.

In step S14, the control section 10 judges as to whether or not the game is to be ended. When the control section 10 judges in this step S14 that the game is not yet to be ended (in case of NO), the flow returns to step S12 to repeat the above-described operation. The control section 10 thus continues the game till it judges that the game is to be ended. When the control section 10 judges in this step S14 that the game is to be ended (in case of YES), the flow advances to step S15.
This video game is ended:
1. when the player who is playing the game instructs the control section 10 to end the game halfway;
2. when the character 30 has fallen out of the rotating member (in the present example, the belt conveyor) predetermined times; or
3. when the player has cleared all stages of the game.

When the player who is playing the game instructs the control section 10 to end the game halfway, the control section 10 controls the liquid crystal display 8 to display an image for the player selecting as to whether or not the present game state is to be saved. When the player wants to save, the control section 10 stores the present game state in the saving memory 5 illustrated in FIG. 1. After this, when the player restarts this game and wants to play it continuously from the saved data, the control section 10 reads out the saved game state from the saving memory 5 and continues the game from the saved state, like the case described in the first embodiment.

If the player does not want to save, the control section 10 immediately ends the game without displaying any result in step S15, and then controls the liquid crystal display 8 to display a standby image for transmission/reception of talk or e-mail. All procedures of this flowchart then end.

When the character 30 has fallen out of the rotating member a predetermined number of times, this video game is over. The flow then advances to step 515, in which the control section 10 controls the liquid crystal display 8 to display the time measurement result till then as a game result. All procedures of this flowchart then end.

FIG. 8C illustrates an example of display image for such a game result of this video game. In the illustrated example, the character 30 is displayed and the time for which the character 30 keeps on the rotating member without falling is displayed in the character's balloon, e.g., "Your result: 02 min 13 sec".

### Evolution/Devolution of Character

In this video game, when the character 30 has fallen out of the rotating member, e.g., three times, the game is over. The appearance of the character 30 is degraded every time when it falls out of the rotating member. Inversely, when the character 30 keeps on the rotating member without falling for a predetermined time period, the appearance is evolved.

FIG. 9 illustrates an example of evolution/devolution of the character 30. In the example of FIG. 9, the control section 10 initially displays a character 30a having an appearance of "rabbit" as the character 30 and the appearance is degraded one step every time when the character 30 falls out of the rotating member.

In the illustrated example, every time when the character 30 falls out of the rotating member, the character 30 changes in appearance from the character 30a of "rabbit" to a character 30b of "frog" and in turn to a character 30c of "worm". When the character 30c of "worm" has fallen out of the rotating member, the game is over.

Inversely, when the character 30 keeps on the rotating member without falling for a predetermined time period, the appearance is evolved one step.

In the present example, every time when the predetermined time period elapses, the character 30 changes in appearance from the character 30c of "worm" to the character 30b of "frog" and in turn to the character 30a of "rabbit".

Since the appearance of the character 30 changes in accordance with the number of times of falling and the time for which the character 30 keeps on the rotating member, a visually entertaining video game can be provided.

### Raising of Stage Level

In this video game, every time when the character 30 keeps on the rotating member for a predetermined time period, the stage level is raised. Thus the more difficult stage in turn is provided for the player. For example, in the first stage as shown in FIG. 8A, which is the easiest stage (the stage level = 1), when the control section 10 judges that a predetermined time period has elapsed while the character 30 keeps on the belt conveyor (or before the character 30 has fallen out of the belt conveyor a predetermined number of times), the control section 10 shifts the game stage to the next one, in which the difficulty of play has been controlled by one of the following manners or a combination thereof:
1. the form of the rotating member is changed;
2. the rotational speed of the rotating member is increased; and
3. the rotational direction of the rotating member is reversed at irregular time intervals.

FIG. 8B illustrates an example of display image of the second stage of this video game. In the example of FIG. 8A, with a display "Level 02" indicating that the present stage is one step higher in stage level than the first stage, a character 30 is put on the rotating member that has been incarnated as, e.g., a rotating wheel.

In case of the belt conveyor of the first stage illustrated in FIG. 8A, since the range in which the character 30 can stay on the rotating member is relatively wide, the player can clear the first stage by relatively easy operations of the rotary operation member 6. In the second stage illustrated in FIG. 8B, however, since the form of the rotating member has been changed into a wheel, the range in which the character 30 can stay on the rotating member has become narrow. Accordingly, the player is required to operate the rotary operation member 6 more delicately. Thus the difficulty of the second stage is higher than that of the first stage. Besides, in this second stage, the rotational speed of the rotating member is slightly higher than that of the first stage. Further, the rotational direction of the rotating member is reversed at irregular time intervals. The difficulty of the second stage has been further increased thereby.

In this video game, the more difficult stage in turn is provided for the player, as described above. When the player has cleared all the stages, the control section 10 controls, in step S15 of FIG. 7, the liquid crystal display 8 to display the time measurement result, which the control section 10 has measured till then, with the character 30, as illustrated in FIG. 8C. All procedures of the flowchart of FIG. 7 then end.

### Network Game

Also in this second embodiment, like the first embodiment, the user of the portable telephone can not only solely play the game but also compete with other players in the game.

When the user of the portable telephone wants to compete with other players, he or she accesses the server machine 2 to download a game program for competition. After playing the game, the player transmits the game result with his or her own name (it may be his or her handle (nickname) or the like) to the server machine 21. Any player can freely access a ranking list and get various contents in accordance with his or her game result, like the first embodiment.

### Effect of Second Embodiment

As described above, in the portable telephone of this second embodiment, the user can play the video game by rotating the rotary operation member 6 so that the character 30 may keep on the rotating member displayed on the liquid crystal display 8. This video game can be realized even in such low performance devices as portable telephones, but yet it is entertaining.

In the above-described embodiments, effectual sounds for the game may be produced through a loudspeaker of the portable telephone. In this case, however, in view of an occasion of playing the game in a public place, it may be preferable that such effectual sounds are usually prevented from being produced and the player can select as to whether or not effectual sounds are to be produced.

In the above-described embodiments, the present invention is applied to portable telephones. But the present invention is applicable also to portable or unportable game machines, etc.
It is of course that the present invention is not limited to the above-described embodiments and various changes and modifications can be made without departing from the technical scope of the invention defined in the appended claims.

## Claims

1. A terminal device comprising:
target measurement value output means for outputting a target measurement value that is a value of height, length, or distance used as a measurement target;
operation means for conducting predetermined operation;
accumulating means for accumulate a predetermined value when the operation means is operated a predetermined number of times;
comparing means for comparing the accumulated value of the predetermined values accumulated by the accumulating means with the target measurement value output from the target measurement value output means; and
comparison result output means for outputting a comparison result obtained from the comparing means.

2. The terminal device according to claim 1, further comprising:
display means for displaying thereon at least one of the target measurement value and the comparison result.

3. The terminal device according to claim 2, wherein the display means further displays a character image.

4. The terminal device according to claim 3, further comprising:
scrolling display control means for controlling the display means to display thereon an image of an obstacle to the character, the obstacle moving by scrolling.

5. The terminal device according to claim 1, 2, 3, or 4, wherein the operation means is rotatable in at least two directions, and the accumulating means accumulates a circumferential length of the operation means the times corresponding to the number of rotations in a predetermined direction of the operation means.

6. The terminal device according to claim 5, wherein the scrolling display control means controls the display means to move the obstacle in a direction that matches the directions for rotating the operation means, and the character display control means controls the display means to relatively move the character in response to an operation of the operation means.

7. The terminal device according to claim 4, 5, or 6, further comprising:
collision detecting means for detecting a collision between the obstacle and the character; and
vibration means for vibrating a body of the device when the collision detecting means has detected a collision between the obstacle and the character.

8. The terminal device according to claim 1, 2, 3, 4, 5, 6, or 7, further comprising wireless communication device.

9. Method for operating a terminal device, comprising the steps of:
outputting a target measurement value that is a value of height, length, or distance used as a measurement target;
accumulating a predetermined value when operation means is operated a predetermined number of times;
comparing the accumulated value with the target measurement value; and
outputting a comparison result obtained.

10. Method according to claim 9, further comprising the step of displaying at least one of the target measurement value and the comparison result on display means.

11. Method according to claim 10, further comprising the step of displaying a character image.

12. Method according to claim 11, further comprising the step of displaying an image of an obstacle to the character, the obstacle moving by scrolling.

13. Method according to claim 9, 10, 11, or 12, wherein the operation means is rotatable in at least two directions, and further comprising the step of accumulating a circumferential length of the operation means the times corresponding to the number of rotations in a predetermined direction of the operation means.

14. Method according to claim 13, wherein the obstacle moves in a direction that matches the directions for rotating the operation means, and the character relatively moves in response to an operation of the operation means.

15. Method according to claim 12, 13, or, 14, further comprising the steps of:
detecting a collision between the obstacle and the character; and
vibrating a body of the device when a collision between the obstacle and the character has been detected.

16. Method according to claim 9, 10, 11, 12, 13, 14, or 15, comprising the step of enabling a wireless communication.

17. A network game system comprising at least one terminal device and a server machine connected with the terminal device through a predetermined network,
wherein the terminal device comprises:
target measurement value output means for outputting a target measurement value that is a value of height, length, or distance used as a measurement target;
operation means for conducting predetermined operation;
accumulating means for accumulating a predetermined value when the operation means is operated a predetermined number of times;
comparing means for comparing the accumulated value of the predetermined values accumulated by the accumulating means with the target measurement value output from the target measurement value output means;
transmitting means for transmitting a comparison result obtained from the comparing means, to the server machine through the network; and
receiving means for receiving data including at least one of an aggregate list of comparison result and digital contents delivered from the server machine through the network.

18. A network game system according to claim 17, comprising at least one terminal device according to anyone of claims 1 to 8.

19. A terminal device comprising:
display means;
display control means for controlling the display means to display thereon a rotating member and a character put on the rotating member and moved in accordance with the rotation of the rotating member;
operation means for moving the character in the direction opposite to the rotational direction of the rotating member;
time measuring means for measuring time for which the character keeps within a range on the rotating member; and
time measurement result display means for displaying, on the display means, a time measurement result obtained from the time measuring means.

20. The terminal device according to claim 19, wherein the operation means is rotatable in at least two directions.

21. The terminal device according to claim 20, wherein the display control means controls to display the rotating member rotating in a direction that matches the rotating directions of the operation means.

22. The terminal device according to claim 19, 20, or 21, wherein the display control means changes the displayed appearance of the character when the character has moved out of the range on the rotating member or when the character has kept within the range on the rotating member for a predetermined time period.

23. The terminal device according to claim 19, 20, 21, or 22, further comprising:
movement detecting means for detecting that the character has moved out of the range on the rotating member; and
vibration means for vibrating a body of the device when the movement detecting means has detected that the character has moved out of the range on the rotating member.

24. The terminal device according to claim 19, 20, 21, 22, or 23, wherein the display control means controls the difficulty of keeping the character on the rotating member, by one or a combination of the manners of changing the form of the rotating member, increasing the rotational speed of the rotating member, and irregularly reversing the rotational direction of the rotating member, when the character has kept on the rotating member for a predetermined time period.

25. The terminal device according to claim 19, 20, 21, 22, 23, or 24, further comprising wireless communication device.

26. Method for operating a terminal device, comprising the steps of:
displaying, on display means, a rotating member and a character put on the rotating member and moved in accordance with the rotation of the rotating member;
moving the character in response to an operation of operation means for moving the character in the direction opposite to the rotational direction of the rotating member;
measuring time for which the character keeps within a range on the rotating member; and
displaying an obtained time measurement result on the display means.

27. Method according to claim 26, wherein the operation means is rotatable in at least two directions, and the rotating member rotates in a direction that matches the directions of the operation means.

28. Method according to claim 26 or 27, wherein the displayed appearance of the character is changed when the character has moved out of the range on the rotating member or when the character has kept within the range on the rotating member for a predetermined time period.

29. Method according to claim 26, 27, or 28, further comprising the steps of:
detecting that the character has moved out of the range on the rotating member; and
vibrating a body of the device when it is detected that the character has moved out of the range on the rotating member.

30. Method according to claim 26, 27, 28, or 29, wherein the difficulty of keeping the character on the rotating member is controlled by one or a combination of the manners of changing the form of the rotating member, increasing the rotational speed of the rotating member, and irregularly reversing the rotational direction of the rotating member, when the character has kept on the rotating member for a predetermined time period.

31. Method according to claim 26, 27, 28, 29, or 30, comprising the step of enabling a wireless communication.

32. A network game system comprising at least one terminal device according to anyone of claims 19 to 25 and a server machine connected with the terminal device through a predetermined network,
wherein the terminal device comprises:
transmitting means for transmitting the time measurement result to the server machine through the network; and
receiving means for receiving data including at least one of an aggregate list of time measurement or comparison result and digital contents delivered from the server machine through the network.

33. Computer program product, comprising computer program means adapted to perform the method steps as defined in anyone of claims 9 to 16 or 26 to 31 when being executed on a computer, digital signal processor, or the like.

34. Storage medium storing thereon a computer program product according to claim 33.
